# EUROPEAN PATENT SPECIFICATION

(11) **EP 4 235 888 B1**
(45) Date of publication and mention of the grant of the patent: **26.11.2025**
(21) Application number: 22883997.3
(22) Date of filing: 18.10.2022
(51) Int. Cl.: H01M 10/04, H01M 10/0583

(54) **MANUFACTURING DEVICE FOR ELECTRODE ASSEMBLY AND METHOD USING THE SAME**
VORRICHTUNG ZUR HERSTELLUNG EINER ELEKTRODENANORDNUNG UND VERFAHREN ZU IHRER VERWENDUNG
DISPOSITIF DE FABRICATION D'UN ENSEMBLE D'ÉLECTRODES ET PROCÉDÉ UTILISANT CELUI-CI

(30) Priority: 18.10.2021 KR 20210138335
(43) Date of publication of application: 30.08.2023
(73) Proprietor: LG Energy Solution, Ltd., Seoul 07335 (KR)
(72) Inventor: KIM, Hoyoung, Daejeon 34122 (KR); JUNG, Hyun Chul, Daejeon 34122 (KR)
(74) Representative: Plasseraud IP
(86) International application number: PCT/KR2022/015894
(87) International publication number: WO 2023/068775

(56) References cited:
- EP-A1- 3 754 772
- WO-A1-2021/194282
- KR-A- 20120 117 306
- KR-A- 20200 092 760
- KR-A- 20200 092 760
- KR-B1- 101 380 133
- KR-B1- 101 959 082
- KR-B1- 102 049 468

## Description

### [TECHNICAL FIELD]

### Cross Citation with Related Application(s)

This application claims the benefit of Korean Patent Application No. 10-2021-0138335 filed on October 18, 2021 with the Korean Intellectual Property Office.

The present disclosure relates to a manufacturing device for an electrode assembly and a manufacturing method using the same, and more particularly to a manufacturing device for an electrode assembly that simplifies a manufacturing process of the electrode assembly, and a manufacturing method using the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

The secondary battery may be classified based on the shape of a battery case into a cylindrical or prismatic battery wherein an electrode assembly is built into a cylindrical or prismatic metal can, and a pouch-type battery in which the electrode assembly is built into a pouch-shaped case made of a stacked aluminum sheet.

Further, the secondary battery may be classified based on the structure of an electrode assembly having a structure in which a cathode and an anode are stacked with a separator being interposed between the cathode and the anode. Typically, there may be mentioned a jelly-roll (wound) type structure in which long sheet type cathodes and long sheet type anodes are rolled with a separator being interposed between the cathode and the anode, a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/bent type electrode assembly, which is a combination of the jelly-roll type electrode assembly and the stacked type electrode assembly.

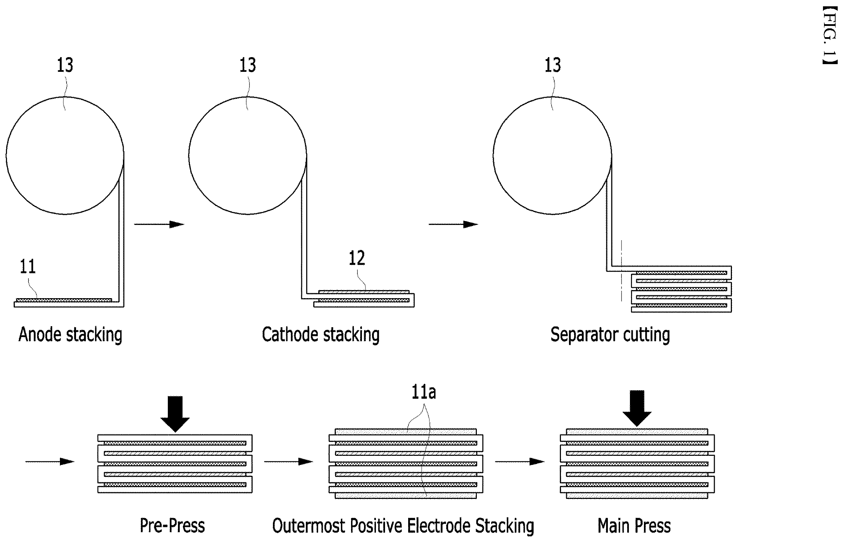

Fig. 1 is a diagram illustrating a manufacturing process of a conventional electrode assembly. Fig. 1 illustrates a manufacturing process of an electrode assembly using a zigzag stacking.

Referring to Fig. 1, the zigzag stacking is an electrode assembly stacking method in which a first electrode 11 and a second electrode 12 are input while a separator 13 unwound from the wound roll moves from one side to the other side and from the other side to one side. The first electrode 11 and the second electrode 12 are stacked in a direction perpendicular to the moving direction of the separator 13, and the separator 13 covers the upper surfaces of the fed first electrode 11 and second electrode 12, so that the first electrode 11 and the second electrode 12 are separated from each other. Here, if the first electrode 11 is a cathode, the second electrode 12 is an anode, and if the first electrode 11 is an anode, the second electrode 12 may be a cathode.

When lamination of the desired number of first electrodes 11 and second electrodes 12 is completed, the separator 13 is cut, and the stacked body is primarily laminated through a pre-press process. After that, the outermost first electrode 11a is input in the upper and lower parts of the stacked body, and the stacked body and the outermost first electrode 11a are finally laminated by a main-press process, thereby manufacturing an electrode assembly.

However, when the electrode assembly is manufactured by a method as shown in Fig. 1, there is a problem that the overall manufacturing time is increased due to the inconvenience of having to separately inputting the outermost electrodes in the upper and lower parts of the stacked body. In addition, the press process must be performed twice as a primary process and a secondary process, and the size of the outermost electrode being input after the zigzag stacking process needs to be designed to be small. Thus, its capacity can be limited.

Therefore, there is a need for a new manufacturing device that can omit a separate stacking process of the outermost electrodes in the zigzag stacking process of the electrode assembly.

EP 3 754 772 A1, KR 2020 0092760 A and WO 2021/194282 A1 disclose manufacturing devices and methods for assembling an electrode stack.

### [DETAILED DESCRIPTION OF THE INVENTION]

### [Technical Problem]

It is an object of the present disclosure to provide a manufacturing device for an electrode assembly that can shorten the manufacturing time and maximize the electrode capacity by reducing the existing zigzag stacking process steps, and a manufacturing method using the same.

However, the problem to be solved by embodiments of the present disclosure is not limited to the above-described problems, and can be variously expanded within the scope of the technical idea included in the present disclosure.

The invention is as defined by the appended claims.

### [Technical Solution]

According to the present invention, there is provided a manufacturing device for an electrode assembly, the device comprising: an electrode supply unit that supplies an electrode, a separator supply unit that supplies the separator in both directions, and a guide roller that switches a direction in which the separator is provided and presses the separator so that the separator and the electrode are adhered, wherein one surface of the electrode provided from the electrode supply unit is perpendicular to one surface of the separator provided from the separator supply unit, and the separator is bent by being pressed according to the movement of the electrode or a stacked body including the electrode, and the bent separator covers one surface of the electrode.

The electrode or the stacked body may be moved from one side of the separator to the other side, or may be moved from the other side of the separator to one side, thereby pressing the separator.

When the electrode or the stacked body moves, the guide roller can rotate at a prescribed position to thereby switch the direction in which the separator is provided.

The guide roller includes a first roller and a second roller located on one side of the separator, the electrode or the stacked body moves in a third direction to press the separator, and the first roller and the second roller switches directions so that the separator is provided in the third direction, and the third direction is perpendicular to a direction in which the separator supply unit supplies the separator.

The first roller and the second roller are disposed separately from each other, and the electrode or the stacked body may pass between the first roller and the second roller.

The separation distance between the first roller and the second roller may be determined according to the thickness of the electrode or stacked body passing between the first roller and the second roller, and the thickness of the separator.

The guide roller includes a third roller and a fourth roller located on the other side of the separator, and when the second electrode presses the separator in the fourth direction, the third roller and the fourth roller may switch directions so that the separator is provided in the fourth direction.

The guide roller includes a first roller and a second roller located on one side of the separator, and a third roller and a fourth roller located on the other side of the separator, and when the electrode moves from the other side of the separator toward one side of the separator, the separation distance between the third roller and the fourth roller may be larger than the separation distance between the first roller and the second roller.

The guide roller may be a heating roller.

The separator supply unit includes a first supply unit that provides the separator in a first direction and a second supply unit that provides the separator in a second direction, the first direction and the second direction are directions opposite to each other, and the separator provided from the first supply unit and the separator provided from the second supply unit mat be arranged on a straight line.

According to another embodiment of the present disclosure, there is provided a manufacturing method of an electrode assembly, comprising the steps of: (a) supplying a first electrode so as to be arranged perpendicular to one surface of a separator provided in a first direction and a second direction, (b) moving the first electrode or a first stacked body including the first electrode along a third direction, and switching the direction in which the separator is provided by a first roller and a second roller, so that the separator is folded so as to cover the first electrode, (c) supplying a second electrode so as to be arranged perpendicular to one surface of the separator provided in the first direction and the second direction, (d) moving the second stacked body including the second electrode along a fourth direction, and switching the direction in which the separator is provided by a third roller and a fourth roller, so that the separator is folded so as to cover the second electrode, and (e) supplying the outermost electrode to the stacked body formed by repeating the steps (a) to (d).

The manufacturing method may further comprise performing lamination through a press process after the step (e).

In the step (a), one first electrode may be provided if no previously provided electrodes exist, and two first electrodes may be provided if previously provided electrodes exist.

The manufacturing method may comprise adjusting the separation distance between the first roller and the second roller, before the step (a).

The manufacturing method may comprise adjusting the separation distance between the third roller and the fourth roller so as to be larger than the separation distance between the first roller and the second roller, before the step (a).

### [BRIEF DESCRIPTION OF THE DRAWINGS]

Fig. 1 is a diagram illustrating a manufacturing process of a conventional electrode assembly;
Fig. 2 is a simplified block diagram of a manufacturing device for an electrode assembly according to one embodiment of the present disclosure;
Figs. 3 and 4 are diagrams illustrating a manufacturing process of an electrode assembly according to one embodiment of the present disclosure; and
Fig. 5 is a diagram illustrating a stacking process of a stacked body during the manufacturing process according to Figs. 3 and 5.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, a manufacturing device for an electrode assembly according to one embodiment of the present disclosure will be described. However, the manufacturing device for an electrode assembly is used in a zigzag stacking process, and compared to conventional devices, the pre-press step and/or the step of providing the outermost electrode can be omitted. In addition, it may not be necessary to limit the size of the outermost electrode provided in the electrode assembly to be small.

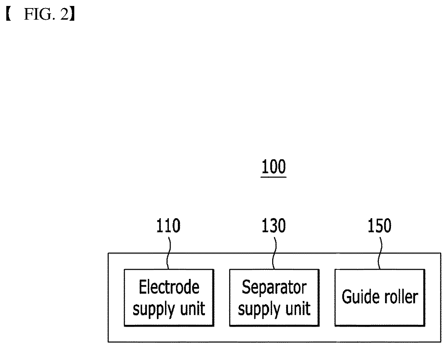

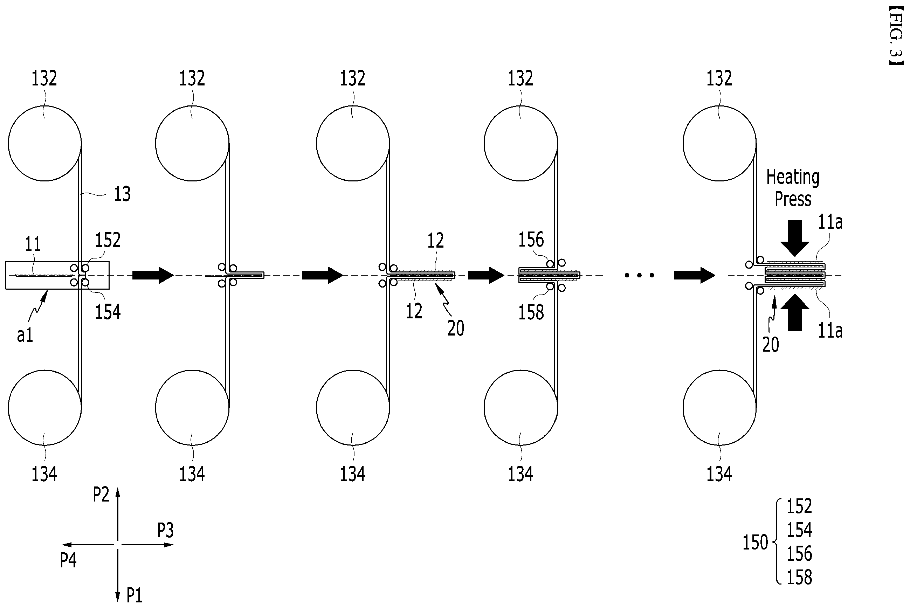

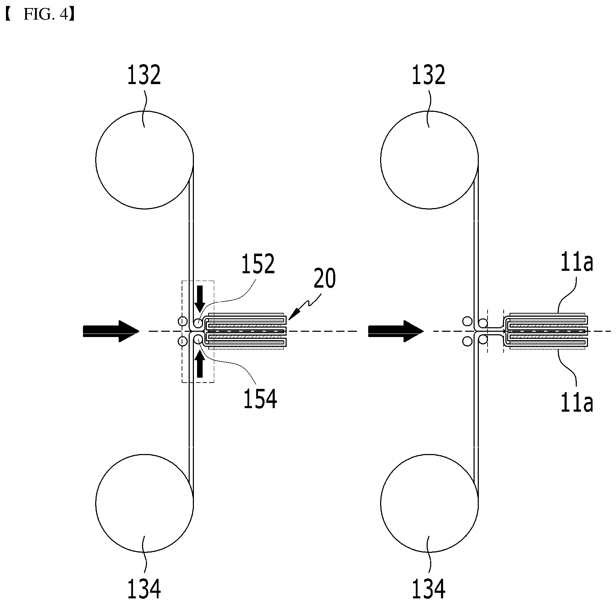

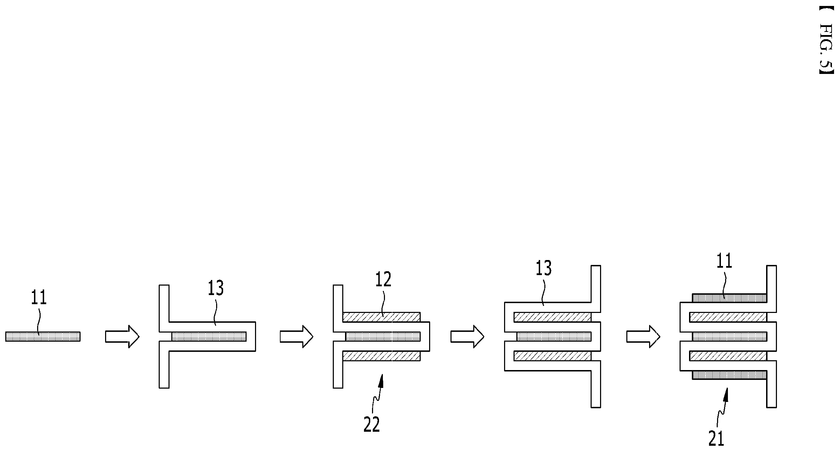

Fig. 2 is a simplified block diagram of a manufacturing device for an electrode assembly according to one embodiment of the present disclosure. Figs. 3 and 4 are diagrams illustrating a manufacturing process of an electrode assembly according to one embodiment of the present disclosure. Fig. 5 is a diagram illustrating a lamination process of a stacked body during the manufacturing process according to Figs. 3 and 4.

Referring to Figs. 2 to 5, the electrode assembly manufacturing device 100 of the present embodiment is for manufacturing an electrode assembly, and may include an electrode supply unit 110, a separator supply unit 130, and a guide roller 150.

The electrode supply unit 110 provides a first electrode 11 or a second electrode 12 in a stacking space a1, the separator supply unit 130 provides a separator 13 in a stacking space a1, and the guide roller 150 may bend the separator 13 so that one surface of the electrodes 11 and 12 and the separator 13 come into contact with each other. The process of providing the electrodes 11 and 12 by the units and bending the separator 13 is repeated, so that an electrode assembly in which the electrodes 11 and 12 and the separator 13 are alternately stacked can be formed. Here, the stacking space a1 may mean a space in which the first electrode 11, the second electrode 12, and the separator 13 are mutually stacked. As shown in Fig. 3, the stacking space a1 may be a space separated by the same distance from a first supply unit 132 and a second supply unit 134.

For convenience of description, the electrode assembly in which the electrodes 11 and 12 and the separator 13 are alternately stacked will be referred to as a stacked body 20 hereinafter, the stacked body 20 on which the first electrode 11 is located on the outermost surface will be described as the first stacked body 21, and the stacked body 20 on which the second electrode 12 is located on the outermost surface will be described as a second stacked body 22.

The electrode supply unit 110 may provide the first electrode 11 or the second electrode 12. The structure and shape of the electrode supply unit 110 can be used without limitation as long as the first electrode 11 and the second electrode 12 can be located on the separator 13, and an example thereof may be a gripper or suction, and the like. At this time, the provided first electrode 11 and second electrode 12 may be in a state of being cut to fit a predetermined size.

The separator supply unit 130 may provide the separator 13. The separator 13 may be unwound and provided from the form of a wound roll. The separator supply unit 130 may include a first supply unit 132 and a second supply unit 134. The separator 13 may be continuously provided to a stacking space a1 through a first supply unit 132 and a second supply unit 134.

The first supply unit 132 may provide the separator 13 in a first direction p1, and the second supply unit 134 may provide the separator 13 in a second direction p2. The separator 13 is provided from both directions by the first supply unit 132 and the second supply unit 134, so that one surface of the separator 13 can be located in parallel to the first direction p1 or the second direction p2. Here, the first direction p1 and the second direction p2 may be in parallel to each other and are directions opposite to each other.

Both ends of each separator 13 provided by the first supply unit 132 and the second supply unit 134 can be connected. This may be because stacking of the outermost part 11a is completed, and then the separators 13 provided by the first supply unit 132 and the second supply unit 134 are attached to each other and cut in the attached state, as shown in Fig. 4 described later. The respective separators 13 provided by the first supply unit 132 and the second supply unit 134 after being cut are in a state of being attached to each other, and thus, in a subsequent process, the electrodes 11 and 12 may be input in a stacking space a1 in which the connected separator 13 is located.

From the connected ends of the separator 13 provided from the first supply unit 132 and the second supply unit 134, the separator 13 may be folded in a zigzag shape. The connected end of the separator 13 can be located at the central portion of the electrode assembly in which the stacking is completed.

The guide roller 150 can be for switching the direction in which the separator 13 is provided and adjusting the position at which the separator 13 is folded. The guide roller 150 may be a heating roller. The guide roller 150 having a heating function applies heat to the separator 13 so that the separator 13 and the electrodes 11 and 12 can be well adhered.

As shown in Fig. 3, the electrodes 11 and 12 or the stacked body 20 can pass between the guide rollers 150. The electrodes 11 and 12 or the stacked body 20 move toward one surface/other surface of the separator 13, thereby pressing the separator 13, and the guide roller 150 located on the other surface/one surface of the separator 13 is fixed, but allows the separator 13 to move along the moving direction of the electrodes 11 and 12 or the stacked body 20 through rotation. Here, the stacked body 20 may be the first stacked body 21 or the second stacked body 22 in which the first electrode 11 or the second electrode 12 is located on the outermost surface.

At this time, the distance between the guide rollers 150 can be adjusted to be narrow so that the separator 13 and the electrodes 11 and 12 can easily come into contact with each other, and can be adjusted widely so as to facilitate movement of the electrodes 11 and 12 or the stacked body 20. For example, when the electrodes 11 and 12 or the stacked body presses one surface of the separator 13, the distance between the two guide rollers 150 located on one surface of the separator 13 can be adjusted to be slightly wide so as not to hinder the movement of the electrodes 11 and 12 or the stacked body, and the distance between the two guide rollers 150 located on the other surface of the separator 13 can be adjusted to be narrow so that the separator 13 is in good contact with the electrodes 11 and 12. Details regarding this will be described later through "Manufacturing Method of Electrode Assembly', and the like.

The guide roller 150 may include a first roller 152, a second roller 154, a third roller 156, and a fourth roller 158. The first roller 152 and the second roller 154 are located side by side on one side of the separator 13 with respect to one surface of the separator 13, and the third roller 156 and the fourth roller 158 may be located side by side on the other side of the separator 13. The first roller 152 and the second roller 154 are located on the third direction p3 of the separator 13, and the third roller 156 and the fourth roller 158 may be located in the fourth direction p4 of the separator 13.

At this time, the third direction p3 and the fourth direction p4 may be in parallel to each other and are directions opposite to each other. The third direction p3 is a direction toward one side from the other side of the separator 13, and the fourth direction p4 may be a direction toward other side from one side of the separator 13. The third direction p3 is a direction perpendicular to the first direction p1 or the second direction p2.

The first roller 152 and the second roller 154 can closely adhere the electrodes 11 and 12 or the stacked body 20, which is input along the third direction p3, and the separator 13, which is supplied from the separator supply unit 130. The third roller 156 and the fourth roller 158 can closely adhere the electrodes 11 and 12 or the stacked body 20, which is input along the fourth direction p4, and the separator 13, which is supplied from the separator supply unit 130. Here, the stacked body 20 includes the electrodes 11 and 12 and the separator 13 which are alternately stacked along the first direction p1 or the second direction p2, and may be a first stacked body 21 or a second stacked body 22. Meanwhile, Fig. 3 shows that the first electrode 11 or the first stacked body 21 moves along the third direction p3, and the second stacked body 22 moves along the fourth direction p4, but it is not necessarily the case, and it is possible to move in a direction opposite thereto.

The first roller 152 can guide the separator 13 provided along the first direction p1 to the third direction p3 to thereby switch the direction of the separator13. The separator 13 can be bent through the first roller 152 to thereby cover the first surfaces of the electrodes 11 and 12 located on the outermost surfaces of the stacked body 20 moving along the third direction p3. Here, the first surface may be a surface facing the first direction from the electrodes 11 and 12, and for convenience of description, the first surface may be described as an upper surface.

The second roller 154 may guide the separator 13 provided along the second direction p2 to the third direction p3 to thereby switch the direction of the separator 13. The separator 13 can be bent through the second roller 154 to thereby cover the second surfaces of the electrodes 11 and 12 located on the outermost surfaces of the stacked body 20 moving along the third direction p3. Here, the second surface may be a surface facing the second direction from the electrodes 11 and 12, and for convenience of description, the second surface may be described as a lower surface.

The third roller 156 can guide the separator 13 provided along the first direction p1 to the fourth direction p4 to thereby switch the direction of the separator 13. The separator 13 can be bent through the third roller 156 to thereby cover the first surface of the electrodes 11 and 12 located on the outermost surface of the stacked body 20 moving along the fourth direction p4.

The fourth roller 158 can guide the separator 13 provided along the second direction p2 to the fourth direction p4 to thereby switch the direction of the separator 13. The separator 13 can be bent through the fourth roller 158 to thereby cover the second surface of the electrodes 11 and 12 located on the outermost surface of the stacked body 20 moving along the fourth direction p4.

In this manner, through the movement of the electrodes 11 and 12 and the pressing of the guide roller 150, the separator 13 can be bent in the third direction p3 and the fourth direction p4. By repeating this process, it can be alternately bent and formed in a zigzag shape. The separator 13 bent in a zigzag shape is interposed between the first electrode 11 and the second electrode 12 to thereby insulate the electrodes 11 and 12 from each other.

Meanwhile, the electrode assembly manufacturing device 100 according to the present embodiment may further include other components in addition to the above-mentioned components. For example, the electrode assembly manufacturing device 100 may include a moving unit that moves the electrodes 11 and 12 or the stacked body in the third direction p3 or the fourth direction p4. In another example, the electrode assembly manufacturing device 100 may further include a pressing device for stacking electrode assemblies.

A manufacturing method of an electrode assembly according to one embodiment of the present invention will be described below. The manufacturing method described below is a manufacturing method of an electrode assembly using the above-mentioned electrode assembly manufacturing device 100.

In the following, the numbers of S1000 to S1700 represented in parentheses are not shown in the drawings, but are clarified in advance that the numbers are represented so as to make it easier to distinguish each step.

Referring to Figs. 3 to 5 again, the method S1000 for manufacturing the electrode assembly according to the present embodiment may include:
a step of supplying a first electrode 11 (S1100),
a step of passing the first electrode 11 or the first stacked body 21 between the two guide rollers 150, so that the separator 13 is folded so as to cover the first electrode 11 (S1200),
a step of supplying a second electrode 12 (S1300),
a step of passing the second stacked body 22 between the two guide rollers 150, so that the separator 13 is folded so as to cover the second electrode 12 (S1400),
a step of supplying the outermost electrode 11a to the stacked body 20 formed by repeating the above steps (S1500),
a step of laminating the stacked body 20 and the outermost electrode 11a using a press process (S1600), and
a step of cutting the separator 13 (S1700),

Next, each step will be described in more detail.

The first electrode 11 may be provided in a stacking space a1 (S1100).

The first electrode 11 may be provided in the stacking space a1 so that one surface thereof is perpendicular to one surface of the unwound separator 13 (S1100). At this time, the first electrode 11 may be located with the first roller 152, the second roller 154 and the separator 13 being interposed therebetween. The first roller 152 and the second roller 154 are located on one side of the separator 13, and the first electrode 11 may be located on the other side of the separator 13.

Meanwhile, when no previously provided electrodes 11 and 12 exist in the stacking space a1, the number of the provided first electrode 11 may be one. However, when previously provided electrodes 11 and 12 exist in the stacking space a1, namely, when the stacked body 20 is formed, the number of the provided first electrode 11 may be two. Here, the provided two first electrodes 11 may be located so as to contact the separator 13 located on the outermost surface of the stacked body 20. That is, the two first electrodes 11 may be located on the first and second surfaces of the stacked body 20. Thereby, the first stacked body 21 may be formed.

The first electrode 11 or the first stacked body 21 can pass between the two guide rollers 150, and the separator 13 can be folded so as to cover the first electrode 11 (S1200).

The first electrode 11 or the first stacked body 21 can move along the third direction p3 to thereby press the separator 13. At this time, the first roller 152 and the second roller 154 may be disposed separately from each other. The first electrode 11 can be input between the first roller 152 and the second roller 154 to thereby press the separator 13 located between the first roller 152 and the second roller 154. The first roller 152 and the second roller 154 can be fixed at a prescribed position to thereby locally press the separator 13 from one side of the separator 13, and can rotate at a prescribed position to thereby switch the advancing direction of the separator 13. Through the movement of the first electrode 11 or the first stacked body 21, the separator 13 can be pushed between the first roller 152 and the second roller 154, and the separator 13 can be folded along the first roller 152 and the second roller 154 to be stacked on the first electrode 11.

When the number of the first electrode 11 is one, the separator 13 can be folded so as to cover both surfaces of the first electrode 11, thereby being stacked on one surface and the other surface of the first electrode 1. Moreover, when the number of the first electrodes 11 is two, namely, when the first laminate 21 is formed, the separator 13 is folded so as to cover one surface of the first electrode 11, namely, the exposed outer surface of the first stacked body 21, thereby being stacked one surface of respective first electrodes 11.

Therefore, the step (S1200) may include a step of pressing the separator 13 between the first roller 152 and the second roller 154 by moving the first electrode 11 or the first stacked body 21 (S1210), a step of allowing the first roller 152 and the second roller 154 to switch the advancing direction of the separator 13 (S1220), a step of allowing the separator 13 to be folded so as to cover one surface of the first electrode 11 (S1230), and a step of closely adhering the first electrode 11 and the separator 13 to form the stacked body 20 (S1240). In step (S1230), the first electrode 11 may be the first electrode 11 itself, or may be located on the outermost surface of the first stacked body 21.

In the step (S1200), the separation distance between the first roller 152 and the second roller 154 may be a first value. The first value may be determined according to the thickness of the stacked body 20 pressed by the first roller 152 and the second roller 154. When one first electrode 11 is provided, namely, when the first electrode 11 provided in the stacking space a1 is the first electrode, the first value may correspond to the sum of twice the thickness of the separator 13 and the thickness of the first electrode 11. In addition, when two first electrodes 11 are provided, namely, when the previously formed stacked body 20 and the first electrode 11 are coupled in the stacking space a1 to form the first stacked body 21, the first value may correspond to the sum of twice the thickness of the separator 13 and the thickness of the first stacked body 21.

Further, when the first electrode 11 moves in the third direction p3, the third roller 156 and the fourth roller 158 located on the other side of the separator 13 may hinder the movement of the first electrode 11. Therefore, the separation distance between the third roller 156 and the fourth roller 158 may be set larger than the first value until the movement of the first electrode 11 in the third direction p3 is completed.

Considering there points, the step (S1200) may, before the step of allowing the first electrode 11 or the first stacked body 21 to press the separator 13 between the first roller 152 and the second roller 154 (S1210), include a step of adjusting the separation distance between the third roller 156 and the fourth roller 158 to be larger than the first value or a step of adjusting the separation distance between the first roller 152 and the second roller 154 so as to correspond to the first value, or the like.

The second electrode 12 may be provided in the stacking space a1 (S1300).

The second electrode 12 can be provided in the stacking space a1 so that one surface thereof is perpendicular to one surface of the unwound separator 13. At this time, the second electrode 12 may be located with the third roller 156, the fourth roller 158 and the separator 13 being interposed therebetween. The third roller 156 and the fourth roller 158 are located on the other side of the separator 13, and the second electrode 12 may be located on one side of the separator 13.

The number of the second electrodes 12 provided in the stacking space a1 may be two. Here, the provided two second electrodes 12 may be respectively located so as to be in contact with the separator 13 located on the outermost surface of the laminate 20 formed through the step (S1200). That is, the two second electrodes 12 may be located on the first and second surfaces of the stacked body 20. Thereby, the second stacked body 22 may be formed.

The second stacked body 22 may pass between the two guide rollers 150, and the separator 13 may be folded so as to cover the second electrode 12 (S1400).

The second stacked body 22 may move in the fourth direction p4 to press the separator 13. At this time, the third roller 156 and the fourth roller 158 may be disposed separately from each other. The second stacked body 22 can be input between the third roller 156 and the fourth roller 158 to thereby press the separator 13 located between the third roller 156 and the fourth roller 158. The third roller 156 and the fourth roller 158 can be fixed at a prescribed position to thereby locally press the separator 13 from one side of the separator 13, and rotate at a prescribed position to thereby switch the advancing direction of the separator 13. Through the movement of the second stacked body 22, the separator 13 may be pushed between the third roller 156 and the fourth roller 158, and the separator 13 can be folded along the third roller 156 and the fourth roller 158 to be stacked on the second electrode 12.

Here, the separator 13 is folded so as to cover one surface, that is, the exposed surface, of the second electrode 12 located on the outside of the second stacked body 22, to be stacked on one surface of each second electrode 12.

Therefore, the step (S1400) may include a step of allowing the second stacked body 22 to press the separator 13 between the third roller 156 and the fourth roller 158 (S1410), a step of allowing the third roller 156 and the fourth roller 158 to switch the advancing direction of the separator 13 (S1420), a step of allowing the separator 13 to be folded so as to cover one surface of the second electrode 12 (S1430), and a step of closely adhering the second electrode 12 and the separator 13 to form the stacked body 20 (S1440). In the step (S1430), the second electrode 12 may be located on the outermost surface of the second stacked body 22.

Here, when the second electrode 12 is first provided in the stacking space a1 in which the first stacked body is formed, the stacked body formed through the above steps may be referred to as a 'second stacked body'. In addition, when a previously formed N-th stacked body exists in the stacking space a1, the stacked body formed through the above steps may be referred to as an 'N+1-th stacked body'. N may be a natural number of 1 or more. N may correspond to the number of times that the electrodes 11 and 12 or the stacked body have passed between the guide rollers 150.

In the step (S1400), the separation distance between the third roller 156 and the fourth roller 158 may be a third value. The third value may be determined according to the thickness of the stacked body 20 pressed by the third roller 156 and the fourth roller 158. Specifically, the third value may correspond to the sum of twice the thickness of the separator 13 and the thickness of the second stacked body 22.

Further, as described above, when the second stacked body 22 moves along the fourth direction p4, the separation distance between the first roller 152 and the second roller 154 located on one side of the separator 13 can be adjusted so as not to hinder the movement of the second electrode 12. Until the movement of the second stacked body 22 in the fourth direction p4 is completed, the separation distance between the third roller 156 and the fourth roller 158 can be set larger than the third value.

Considering these points, the step (S1400) may, before the step of allowing the second stacked body 22 to press the separator 13 between the third roller 156 and the fourth roller 158 (S1410), include a step of adjusting the separation distance between the first roller 152 and the second roller 154 to be larger than the third value, or a step of adjusting the separation distance between the third roller 156 and the fourth roller 158 so as to correspond to the third value, and the like.

By repeating the above steps, the outermost electrode 11a can be provided on the stacked body 20 formed in a preset shape (S1500).

The step (S1500) may include a step of forming an N-th stacked body by repeating the steps (S1100) to (S1400). Here, N is a natural number of 3 or more, and may correspond to the number of times that the electrodes 11 and 12 or the stacked body 20 have passed between the guide rollers 150. That is, the N-th stacked body may refer to the stacked body 20 formed through the above-mentioned steps. In forming the N-th stacked body, the number of the electrodes 11 and 12 provided when forming the first stacked body may be one, but the number of the electrodes 11 and 12 provided when forming the second stacked body may be two.

In the N-th stacked body, the electrodes 11 and 12 inputted later may be located outside the N-th stacked body. That is, the first electrode 11, which is first input in the N-th stacked body, is the innermost electrode of the N-th stacked body and may be located in the center.

The step (S1500) may include a step of providing the outermost electrode 11a to the N-th stacked body. The outermost electrode 11a may be provided in the stacking space a1. The number of the outermost electrode 11a may be two. The provided two outermost electrodes 11a may be respectively located so as to be in contact with the separator 13 located on the outermost surface of the previously formed N-th stacked body.

The outermost electrode 11a may be a cathode or an anode. More specifically, if the electrodes 11 and 12 located at the outermost part of the N-th stacked body are anodes, the outermost electrode 11a may be a cathode, and if the electrodes 11 and 12 located at the outermost part of the N-th stacked body are cathodes, the outermost electrode 11a may be an anode. Further, the outermost electrode 11a may have the same polarity as that of the first electrode 11 that is first input.

The stacked body 20 and the outermost electrode 11a may be laminated through a press process (S1600).

As for the pressing device used in the pressing process of this step, any device can be used as long as it can uniformly press one surface of the stacked body 20, and an example thereof may include a jig, a pneumatic machine, or a roll press. In addition, the pressing device can apply heat as well as pressure at the same time, so that it is possible to heat-seal between the electrodes 11 and 12 and the separator 13.

The pressing device may press the N-th stacked body coupled with the outermost electrode 11a in the planar direction. The N-th stacked body coupled with the outermost electrode 11a may be referred to as an N+1-th stacked body, and the pressing device can press one surface of the N+1-th stacked body to ensure good contact or coupling between the electrodes 11 and 12 and the separator 13.

When lamination of the outermost electrode 11a is completed, a stacked body can be manufactured by cutting the separator 13 (S1700).

When lamination of the stacked body 20 and the outermost electrode 11a is completed, the guide roller 150 may press and contact the separator 13 supplied from the separator supply units 130. The first roller 152 and the second roller 154 may approach toward each other. As the separation distance between the first roller 152 and the second roller 154 is reduced, the separators 13 supplied from the first supply unit 132 and the second supply unit 134 may be in contact each other. The separator 13 in contact with each other may be joined by heat applied from the first roller 152 and the second roller 154. After joining the separator 13, the separator 13 may be cut, and the completed stacked body 20 may be moved to a subsequent process.

Therefore, the step (S1700) may include a step of moving the first roller 152 and the second roller 154 toward each other (S1710), a step of contacting the separators 13 supplied from the first supply unit 132 and the second supply unit 134 with each other (S1720), and a step of cutting a separator 13 (S1730).

Although preferred embodiments of the present disclosure have been described in detail above, the scope of the present disclosure is not limited thereto, and various modifications and improvements can be made by those skilled in the art, without departing from the scope of the principles of the invention described in the appended claims.

### [Description of Reference Numerals]

11: first electrode
12: second electrode
13: separator
20: stacked body
21: first stacked body
22: second stacked body
100: electrode assembly manufacturing device
110: electrode supply unit
130: separator supply unit
150: guide roller

### [Industrial Applicability]

According to embodiments, the electrode assembly manufacturing device of the present disclosure and a manufacturing method using the same can reduce the existing zigzag stacking process steps, thereby shortening the manufacturing time of the electrode assembly and maximizing the electrode capacity.

The effects of the present disclosure are not limited to the effects mentioned above and additional other effects not described above will be clearly understood from the description of the appended claims by those skilled in the art.

## Claims

1. A manufacturing device (100) for an electrode assembly, the device (100) comprising:
a separator supply unit (130) including a first supply unit (132) configured to provide a separator (13) in a first direction and a second supply unit (134) configured to provide a separator (13) in a second direction, the first direction and the second direction being directions opposite to each other,
an electrode supply unit (110) configured for supplying an electrode in a third direction and a fourth direction, the third direction and the fourth direction being directions opposite to each other, the third direction being perpendicular to the first direction, and
a guide roller (150) configured to switch a direction in which the separator (13) is intended to be provided and to press the separator (13) so as to adhere the separator (13) and the electrode,
wherein the electrode supply unit (110) and the separator supply unit (130) are positioned such that one surface of the electrode to be provided from the electrode supply unit (110) is perpendicular to one surface of the separator (13), when provided from the separator supply unit (130), and
wherein the electrode supply unit (110) is configured to move the electrode or a stacked body (20) including the electrode so that the separator (13) is bent by being pressed according to the movement of the electrode or a stacked body (20) including the electrode, such that the bent separator (13) covers one surface of the electrode.

2. The manufacturing device according to claim 1, wherein:
the electrode supply unit (110) is configured to move the electrode or the stacked body (20) from one side of the separator (13) to the other side, or from the other side of the separator (13) to one side, thereby pressing the separator (13).

3. The manufacturing device according to claim 1, wherein:
the guide roller (150) is configured such that when the electrode or the stacked body (20) is moved, the guide roller (150) rotates at a prescribed position to thereby switch the direction in which the separator (13) is provided.

4. The manufacturing device according to claim 1, wherein:
the guide roller (150) includes a first roller (152) and a second roller (154) located on one side of the separator (13) when the separator is supplied by the separator supply unit,
the manufacturing device being configured to move the electrode or the stacked body (20) in a third direction to press the separator (13), when provided, and
to switch directions of the first roller (152) and the second roller (154) so that the separator (13), when provided, is provided in the third direction, and
the third direction is perpendicular to a direction in which the separator supply unit (130) is configured to supply the separator (13).

5. The manufacturing device according to claim 4, wherein:
the first roller (152) and the second roller (154) are disposed separately from each other, and
the electrode or the stacked body (20) passes between the first roller (152) and the second roller (154) when supplied by the electrode supply unit (110).

6. The manufacturing device according to claim 5, wherein:
a separation distance between the first roller (152) and the second roller (154) is determined according to the thickness of the electrode or the stacked body (20) intended to pass between the first roller (152) and the second roller (154), and the thickness of the separator (13) intended to be provided.

7. The manufacturing device according to claim 1, wherein:
the guide roller (150) includes a third roller (156) and a fourth roller (158) located on the other side of the separator (13), when provided, and
the guide roller is configured so that when a second electrode (12) presses the separator (13) in the fourth direction, the third roller (156) and the fourth roller (158) switch directions so that the separator (13) is provided in the fourth direction.

8. The manufacturing device according to claim 1, wherein:
the guide roller (150) includes a first roller (152) and a second roller (154) located on one side of the separator (13), and a third roller (156) and a fourth roller (158) located on the other side of the separator (13), when the separator is being supplied, and
the separation distance between the third roller (156) and the fourth roller (158) is larger than the separation distance between the first roller (152) and the second roller (154), when the electrode moves from the other side of the separator (13) toward one side of the separator (13), when the electrode and the separator (13) are provided.

9. The manufacturing device according to claim 1, wherein:
the guide roller (150) is a heating roller.

10. The manufacturing device according to claim 1, wherein:
wherein separator supply unit is configured such that the separator (13) when provided from the first supply unit (132) and the separator (13) when provided from the second supply unit (134) are arranged on a straight line.

11. A manufacturing method of an electrode assembly, comprising the steps of:
(a) supplying a first electrode (11) so as to be arranged perpendicular to one surface of a separator (13) provided in a first direction and a second direction, the first direction and the second direction being directions opposite to each other,
(b) moving the first electrode (11) or a first stacked body (21) including the first electrode (11) along a third direction, and switching the direction in which the separator (13) is provided by a first roller (152) and a second roller (154), so that the separator (13) is folded so as to cover the first electrode (11),
(c) supplying a second electrode (12) so as to be arranged perpendicular to one surface of the separator (13) provided in the first direction and the second direction, the first direction and the second direction being directions opposite to each other,
(d) moving a second stacked body (22) including the second electrode (12) along a fourth direction, and switching the direction in which the separator (13) is provided by a third roller (156) and a fourth roller (158), so that the separator (13) is folded so as to cover the second electrode (12), and
(e) supplying an outermost electrode (11a) to a stacked body (20) formed by repeating the steps (a) to (d).

12. The manufacturing method according to claim 11,
further comprising performing lamination through a press process after the step (e).

13. The manufacturing method according to claim 11, wherein:
in the step (a), one first electrode (11) is provided if no previously provided electrodes exist, and two first electrodes (11) are provided if previously provided electrodes exist.

14. The manufacturing method according to claim 11, comprising:
adjusting the separation distance between the first roller (152) and the second roller (154), before the step (a).

15. The manufacturing method according to claim 11, comprising:
adjusting the separation distance between the third roller (156) and the fourth roller (158) so as to be larger than the separation distance between the first roller (152) and the second roller (154), before the step (a).

## Patentansprüche

1. Herstellungsvorrichtung (100) für eine Elektrodenanordnung, wobei die Vorrichtung (100) umfasst:
eine Separatorzuführeinheit (130), welche eine erste Zuführeinheit (132), welche dazu eingerichtet ist, einen Separator (13) in einer ersten Richtung bereitzustellen, und eine zweite Zuführeinheit (134) umfasst, welche dazu eingerichtet ist, einen Separator (13) in einer zweiten Richtung bereitzustellen, wobei die erste Richtung und die zweite Richtung Richtungen sind, welche einander entgegengesetzt sind,
eine Elektrodenzuführeinheit (110), welche dazu eingerichtet ist. eine Elektrode in einer dritten Richtung und einer vierten Richtung zuzuführen, wobei die dritte Richtung und die vierte Richtung Richtungen sind, welche einander entgegengesetzt sind, wobei die dritte Richtung senkrecht zu der ersten Richtung ist, und
eine Führungswalze (150), welche dazu eingerichtet ist, eine Richtung, in welcher der Separator (13) vorgesehen ist, bereitgestellt zu sein, zu wechseln und den Separator (13) zu pressen, um den Separator (13) und die Elektrode zu verkleben,
wobei die Elektrodenzuführeinheit (110) und die Separatorzuführeinheit (130) derart positioniert sind, dass eine Fläche der Elektrode, welche von der Elektrodenzuführeinheit (110) bereitgestellt werden soll, senkrecht zu einer Fläche des Separators (13) ist, wenn sie von der Separatorzuführeinheit (130) bereitgestellt ist, und
wobei die Elektrodenzuführeinheit (110) dazu eingerichtet ist, die Elektrode oder einen gestapelten Körper (20), welcher die Elektrode umfasst, zu bewegen, so dass der Separator (13) durch einen gepressten Zustand gemäß der Bewegung der Elektrode oder des gestapelten Körpers (20), welcher die Elektrode umfasst, derart gebogen ist, dass der gebogene Separator (13) eine Fläche der Elektrode bedeckt.

2. Herstellungsvorrichtung nach Anspruch 1, wobei:
die Elektrodenzuführeinheit (110) dazu eingerichtet ist, die Elektrode oder den gestapelten Körper (20) von einer Seite des Separators (13) zu der anderen Seite zu bewegen oder von der anderen Seite des Separators (13) zu einer Seite zu bewegen, wodurch der Separator (13) gepresst ist.

3. Herstellungsvorrichtung nach Anspruch 1, wobei:
die Führungswalze (150) derart eingerichtet ist, dass, wenn der gestapelte Körper (20) bewegt ist, die Führungswalze (150) an einer vorgeschriebenen Position rotiert, um dadurch die Richtung, in welcher der Separator (13) bereitgestellt ist, zu wechseln.

4. Herstellungsvorrichtung nach Anspruch 1, wobei:
die Führungswalze (150) eine erste Walze (152) und eine zweite Walze (154) umfasst, welche sich an einer Seite des Separators (13) befinden, wenn der Separator durch die Separatorzuführeinheit zugeführt ist,
die Herstellungsvorrichtung dazu eingerichtet ist, die Elektrode oder den gestapelten Körper (20) in einer dritten Richtung zu bewegen, um den Separator (13) zu pressen, wenn bereitgestellt, und
Richtungen der ersten Walze (152) und der zweiten Walze (154) zu wechseln, so dass der Separator (13), wenn bereitgestellt, in der dritten Richtung bereitgestellt ist, und
die dritte Richtung senkrecht zu einer Richtung ist, in welcher die Separatorzuführeinheit (130) dazu eingerichtet ist, den Separator (13) zuzuführen.

5. Herstellungsvorrichtung nach Anspruch 4, wobei:
die erste Walze (152) und die zweite Walze (154) separat voneinander angeordnet sind, und
die Elektrode oder der gestapelte Körper (20) zwischen der ersten Walze (152) und der zweiten Walze (154) hindurchtritt, wenn durch die Elektrodenzuführeinheit (110) zugeführt.

6. Herstellungsvorrichtung nach Anspruch 5, wobei:
ein Trennungsabstand zwischen der ersten Walze (152) und der zweiten Walze (154) gemäß der Dicke der Elektrode oder des gestapelten Körpers (20), welche/welcher dazu vorgesehen ist, zwischen der ersten Walze (152) und der zweiten Walze (154) hindurchzutreten, und der Dicke des Separators (13) bestimmt ist, welcher dazu vorgesehen ist, bereitgestellt zu sein.

7. Herstellungsvorrichtung nach Anspruch 1, wobei:
die Führungswalze (150) eine dritte Walze (156) und eine vierte Walze (158) umfasst, welche sich an der anderen Seite des Separators (13) befinden, wenn bereitgestellt, und
die Führungswalze dazu eingerichtet ist, dass, wenn eine zweite Elektrode (12) den Separator (13) in der vierten Richtung presst, die dritte Walze (156) und die vierte Walze (158) Richtungen wechseln, so dass der Separator (13) in der vierten Richtung bereitgestellt ist.

8. Herstellungsvorrichtung nach Anspruch 1, wobei:
die Führungswalze (150) eine erste Walze (152) und eine zweite Walze (154), welche sich an einer Seite des Separators (13) befinden, und eine dritte Walze (156) und eine vierte Walze (158) umfasst, welche sich an der anderen Seite des Separators (13) befinden, wenn der Separator zugeführt ist, und
der Trennungsabstand zwischen der dritten Walze (156) und der vierten Walze (158) größer als der Trennungsabstand zwischen der ersten Walze (152) und der zweiten Walze (154) ist, wenn sich die Elektrode von der anderen Seite des Separators (13) in Richtung einer Seite des Separators (13) bewegt, wenn die Elektrode und der Separator (13) bereitgestellt sind.

9. Herstellungsvorrichtung nach Anspruch 1, wobei:
die Führungswalze (150) eine Heizwalze ist.

10. Herstellungsvorrichtung nach Anspruch 1, wobei:
die Separatorzuführeinheit derart eingerichtet ist, dass der Separator (13), wenn von der ersten Zuführeinheit (132) bereitgestellt, und der Separator (13), wenn von der zweiten Zuführeinheit (134) bereitgestellt ist, auf einer geraden Linie angeordnet sind.

11. Herstellungsverfahren einer Elektrodenanordnung, umfassend die Schritte:
(a) Zuführen einer ersten Elektrode (11), um senkrecht zu einer Fläche eines Separators (13) angeordnet zu werden, welcher in einer ersten Richtung und einer zweiten Richtung bereitgestellt, wobei die erste Richtung und die zweite Richtung Richtungen sind, welche einander entgegengesetzt sind,
(b) Bewegen der ersten Elektrode (11) oder eines ersten gestapelten Körpers (21), welcher die erste Elektrode (11) umfasst, entlang einer dritten Richtung, und Wechseln der Richtung, in welcher der Separator (13) durch eine erste Walze (152) und eine zweite Walze (154) bereitgestellt wird, so dass der Separator (13) gefaltet wird, um die erste Elektrode (11) zu bedecken,
(c) Zuführen einer zweiten Elektrode (12), um senkrecht zu einer Fläche des Separators (13) angeordnet zu sein, welcher in der ersten Richtung und der zweiten Richtung bereitgestellt wird, wobei die erste Richtung und die zweite Richtung Richtungen sind, welche einander entgegengesetzt sind,
(d) Bewegen eines zweiten gestapelten Körpers (22), welcher die zweite Elektrode (12) umfasst, entlang einer vierten Richtung und Wechseln der Richtung, in welcher der Separator (13) durch eine dritte Walze (156) und eine vierte Walze (158) bereitgestellt wird, so dass der Separator (13) gefaltet wird, um die zweite Elektrode (12) zu bedecken, und
(e) Zuführen einer äußersten Elektrode (11a) zu einem gestapelten Körper (20), welcher durch ein Wiederholen der Schritte (a) bis (d) ausgebildet wird.

12. Herstellungsverfahren nach Anspruch 11,
ferner umfassend ein Durchführen einer Laminierung durch einen Pressprozess nach dem Schritt (e).

13. Herstellungsverfahren nach Anspruch 11, wobei:
in dem Schritt (a), eine erste Elektrode (11) bereitgestellt wird, falls keine zuvor bereitgestellten Elektroden existieren, und zwei erste Elektroden (11) bereitgestellt werden, falls zuvor bereitgestellte Elektroden existieren.

14. Herstellungsverfahren nach Anspruch 11, umfassend:
Anpassen des Trennungsabstands zwischen der ersten Walze (152) und der zweiten Walze (154), vor dem Schritt (a).

15. Herstellungsverfahren nach Anspruch 11, umfassend:
Anpassen des Trennungsabstands zwischen der dritten Walze (156) und der vierten Walze (158), um größer zu sein als der Trennungsabstand zwischen der ersten Walze (152) und der zweiten Walze (154), vor dem Schritt (a).

## Revendications

1. Dispositif de fabrication (100) pour un ensemble électrode, le dispositif (100) comprenant :
une unité d'alimentation en séparateur (130) comportant une première unité d'alimentation (132) configurée pour fournir un séparateur (13) dans une première direction et une deuxième unité d'alimentation (134) configurée pour fournir un séparateur (13) dans une deuxième direction, la première direction et la deuxième direction étant des directions opposées l'une à l'autre,
une unité d'alimentation en électrode (110) configurée pour fournir une électrode dans une troisième direction et une quatrième direction, la troisième direction et la quatrième direction étant des directions opposées l'une à l'autre, la troisième direction étant perpendiculaire à la première direction, et
un rouleau de guidage (150) conçu pour changer une direction dans laquelle le séparateur (13) doit être fourni et pour presser le séparateur (13) de façon à faire adhérer le séparateur (13) à l'électrode,
dans lequel l'unité d'alimentation en électrode (110) et l'unité d'alimentation en séparateur (130) sont positionnées de sorte qu'une surface de l'électrode devant être fournie par l'unité d'alimentation en électrode (110) soit perpendiculaire à une surface du séparateur (13), lorsqu'il est fourni par l'unité d'alimentation en séparateur (130), et
dans lequel l'unité d'alimentation en électrode (110) est configurée pour déplacer l'électrode ou un corps empilé (20) comportant l'électrode afin que le séparateur (13) soit plié en étant pressé en fonction du mouvement de l'électrode ou d'un corps empilé (20) comportant l'électrode, de sorte que le séparateur (13) plié recouvre une surface de l'électrode.

2. Dispositif de fabrication selon la revendication 1, dans lequel :
l'unité d'alimentation en électrode (110) est conçue pour déplacer l'électrode ou le corps empilé (20) d'un côté du séparateur (13) à l'autre côté, ou de l'autre côté du séparateur (13) audit côté, pour ainsi presser le séparateur (13).

3. Dispositif de fabrication selon la revendication 1, dans lequel :
le rouleau de guidage (150) est conçu de sorte que, lorsque l'électrode ou le corps empilé (20) est déplacé, le rouleau de guidage (150) tourne à une position prescrite, pour ainsi changer la direction dans laquelle le séparateur (13) est disposé.

4. Dispositif de fabrication selon la revendication 1, dans lequel :
le rouleau de guidage (150) comporte un premier rouleau (152) et un deuxième rouleau (154) situés d'un côté du séparateur (13) lorsque le séparateur est fourni par l'unité d'alimentation en séparateur,
le dispositif de fabrication étant configuré pour déplacer l'électrode ou le corps empilé (20) dans une troisième direction pour presser le séparateur (13), lorsqu'il est fourni, et
pour changer des directions du premier rouleau (152) et du deuxième rouleau (154) de sorte que le séparateur (13), lorsqu'il est fourni, soit fourni dans la troisième direction, et
la troisième direction est perpendiculaire à une direction dans laquelle l'unité d'alimentation en séparateur (130) est configurée pour fournir le séparateur (13).

5. Dispositif de fabrication selon la revendication 4, dans lequel :
le premier rouleau (152) et le deuxième rouleau (154) sont disposés séparément l'un de l'autre, et
l'électrode ou le corps empilé (20) passe entre le premier rouleau (152) et le deuxième rouleau (154) lorsqu'elle est fournie par l'unité d'alimentation en électrode (110).

6. Dispositif de fabrication selon la revendication 5, dans lequel :
une distance de séparation entre le premier rouleau (152) et le deuxième rouleau (154) est déterminée en fonction de l'épaisseur de l'électrode ou du corps empilé (20) devant passer entre le premier rouleau (152) et le deuxième rouleau (154), et de l'épaisseur du séparateur (13) devant être fourni.

7. Dispositif de fabrication selon la revendication 1, dans lequel :
le rouleau de guidage (150) comporte un troisième rouleau (156) et un quatrième rouleau (158) situés de l'autre côté du séparateur (13), lorsqu'il est fourni, et
le rouleau de guidage est configuré de sorte que, lorsqu'une deuxième électrode (12) presse le séparateur (13) dans la quatrième direction, le troisième rouleau (156) et le quatrième rouleau (158) changent de direction, de sorte que le séparateur (13) soit fourni dans la quatrième direction.

8. Dispositif de fabrication selon la revendication 1, dans lequel :
le rouleau de guidage (150) comporte un premier rouleau (152) et un deuxième rouleau (154) situés d'un côté du séparateur (13), et un troisième rouleau (156) et un quatrième rouleau (158) situés de l'autre côté du séparateur (13), lorsque le séparateur est fourni, et
la distance de séparation entre le troisième rouleau (156) et le quatrième rouleau (158) est supérieure à la distance de séparation entre le premier rouleau (152) et le deuxième rouleau (154), lorsque l'électrode se déplace de l'autre côté du séparateur (13) vers un côté du séparateur (13), lorsque l'électrode et le séparateur (13) sont fournis.

9. Dispositif de fabrication selon la revendication 1, dans lequel :
le rouleau de guidage (150) est un rouleau chauffant.

10. Dispositif de fabrication selon la revendication 1, dans lequel :
dans lequel l'unité d'alimentation en séparateur est configurée de sorte que le séparateur (13), lorsqu'il est fourni par la première unité d'alimentation (132), et le séparateur (13), lorsqu'il est fourni par la deuxième unité d'alimentation (134), soient disposés sur une ligne droite.

11. Procédé de fabrication d'un ensemble électrode, comprenant les étapes suivantes :
(a) la fourniture d'une première électrode (11) de façon à ce qu'elle soit agencée perpendiculairement à une surface d'un séparateur (13) fourni dans une première direction et une deuxième direction, la première direction et la deuxième direction étant des directions opposées l'une à l'autre,
(b) le déplacement de la première électrode (11) ou d'un premier corps empilé (21) comportant la première électrode (11) le long d'une troisième direction, et le changement de la direction dans laquelle le séparateur (13) est fourni par un premier rouleau (152) et un deuxième rouleau (154), de sorte que le séparateur (13) soit plié de façon à recouvrir la première électrode (11),
(c) la fourniture d'une deuxième électrode (12) de façon à ce qu'elle soit agencée perpendiculairement à une surface du séparateur (13) fourni dans la première direction et la deuxième direction, la première direction et la deuxième direction étant des directions opposées l'une à l'autre,
(d) le déplacement d'un deuxième corps empilé (22) comportant la deuxième électrode (12) le long d'une quatrième direction, et le changement de la direction dans laquelle le séparateur (13) est fourni par un troisième rouleau (156) et un quatrième rouleau (158), de sorte que le séparateur (13) soit plié de façon à recouvrir la deuxième électrode (12), et
(e) la fourniture d'une électrode la plus extérieure (11a) à un corps empilé (20) formé en répétant les étapes (a) à (d).

12. Procédé de fabrication selon la revendication 11,
comprenant en outre la réalisation d'une stratification au moyen d'un procédé de pressage après l'étape (e).

13. Procédé de fabrication selon la revendication 11, dans lequel :
dans l'étape (a), une première électrode (11) est fournie s'il n'existe aucune électrode précédemment fournie, et deux premières électrodes (11) sont fournies s'il existe des électrodes précédemment fournies.

14. Procédé de fabrication de l'électrode selon la revendication 11 comprenant :
l'ajustement de la distance de séparation entre le premier rouleau (152) et le deuxième rouleau (154), avant l'étape (a).

15. Procédé de fabrication de l'électrode selon la revendication 11 comprenant :
l'ajustement de la distance de séparation entre le troisième rouleau (156) et le quatrième rouleau (158) de façon à ce qu'elle soit supérieure à la distance de séparation entre le premier rouleau (152) et le deuxième rouleau (154), avant l'étape (a).
